# FASCICULE DE BREVET EUROPEEN

(11) **EP 2 731 817 B1**
(45) Date de publication et mention de la délivrance du brevet: **22.05.2019**
(21) Numéro de dépôt: 12733764.0
(22) Date de dépôt: 12.07.2012
(51) Int. Cl.: B60K 37/06, B60K 35/00, B60K 37/02, B60W 50/08

(54) **SYSTÈME D'AFFICHAGE D'INFORMATIONS DANS UN VÉHICULE**
SYSTEM ZUM ANZEIGEN VON INFORMATIONEN IN EINEM FAHRZEUG
SYSTEM FOR DISPLAYING INFORMATION IN A VEHICLE

(30) Priorité: 12.07.2011 FR 1156349
(43) Date de publication de la demande: 21.05.2014
(73) Titulaire: Faurecia Intérieur Industrie, 92000 Nanterre (FR)
(72) Inventeur: GUERREIRO, Pierre, F-95580 MARGENCY (FR)
(74) Mandataire: Lavoix
(86) Numéro de dépôt international: PCT/EP2012/063720
(87) Numéro de publication internationale: WO 2013/007794

(56) Documents cités:
- EP-A1- 0 005 436
- FR-A1- 2 824 510

## Description

La présente invention concerne un système d'affichage d'au moins une information relative à un véhicule dans l'habitacle dudit véhicule, comprenant :
- un dispositif d'acquisition d'informations pour acquérir au moins une information relative au véhicule ;
- un dispositif d'affichage comprenant au moins deux sources lumineuses et configuré pour afficher la ou chaque information relative au véhicule dans l'habitacle du véhicule ;
- une unité de commande, configurée pour recevoir la ou chaque information acquise par le dispositif d'acquisition et pour commander l'allumage des sources lumineuses selon un motif mémorisé correspondant à l'information reçue.

Dans un véhicule, il est utile, pour des raisons de sécurité et/ou de confort de conduite, de fournir au conducteur des informations sur sa conduite, sur son environnement de conduite et sur l'état d'un certain nombre de paramètres de fonctionnement du véhicule.

A cet effet, il est possible de prévoir sur le tableau de bord un voyant lumineux dédié pour chaque information à communiquer au conducteur. Chacun de ces voyants lumineux est associé à un pictogramme particulier. Ces voyants lumineux sont agencés côte à côte sur le tableau de bord du véhicule.

Or, on assiste actuellement à une multiplication des informations que l'on souhaite fournir à un automobiliste et pour lesquelles il est nécessaire de prévoir des voyants lumineux spécifiques sur le tableau de bord. Ces informations additionnelles concernent par exemple la présence d'obstacles autour du véhicule, la comparaison entre la vitesse du véhicule et une vitesse limite autorisée, la présence de bouchons etc.

Pour fournir ces informations complémentaires au conducteur, il est possible de concevoir un pictogramme dédié pour chaque information et d'ajouter les voyants lumineux correspondants sur le tableau de bord à côté des voyants existants. Or, la place disponible pour l'agencement de tels voyants lumineux sur le tableau de bord est réduite, ce qui limite le nombre d'informations que l'on peut fournir au conducteur ou oblige à resserrer les voyants ou à diminuer la taille des pictogrammes. En outre, la multiplication des pictogrammes différents, de petite taille, et correspondant chacun à une information spécifique, contribue à saturer l'attention du conducteur du véhicule et peut constituer un danger en distrayant le conducteur de la conduite du véhicule.

FR 2 824 510 A1 décrit une planche de bord pour véhicule automobile comprenant, logé dans celle-ci, un combiné d'instrumentation centralisant les informations relatives à différentes fonctions du véhicule.

EP 0 005 436 A1 décrit une unité d'avertissement pour véhicule automobile, selon le préambule de la revendication 1, comprenant des moyens d'affichage centralisé d'états de fonctionnement à surveiller du véhicule automobile.

Un des buts de l'invention est de fournir dans un véhicule un affichage permettant de communiquer un nombre important d'informations au conducteur et qui soit en outre esthétique et facilement perçu par les occupants du véhicule et en particulier par le conducteur et agencé de sorte à ne pas perturber la conduite du véhicule.

A cet effet, l'invention a pour objet un système d'affichage selon la revendication 1.

Le système d'affichage selon l'invention peut également comprendre l'une ou plusieurs des caractéristiques des revendications 2 à 8.

L'invention a également pour objet un véhicule selon la revendication 9.

L'invention a également pour objet un procédé d'affichage selon la revendication 10.

L'invention sera mieux comprise à la lecture de la description qui va suivre, donnée uniquement à titre d'exemple et faite en se référant aux dessins annexés, sur lesquels :
- la figure 1 est une représentation schématique d'un système d'affichage selon l'invention ;
- la figure 2 est une représentation d'une planche de bord munie d'un dispositif d'affichage du système d'affichage de la figure 1 ;
- la figure 3 est une représentation schématique en section d'une partie du dispositif d'affichage de la figure 2 ; et
- les figures 4 à 6 sont des exemples de séquences d'affichage d'informations selon l'invention.

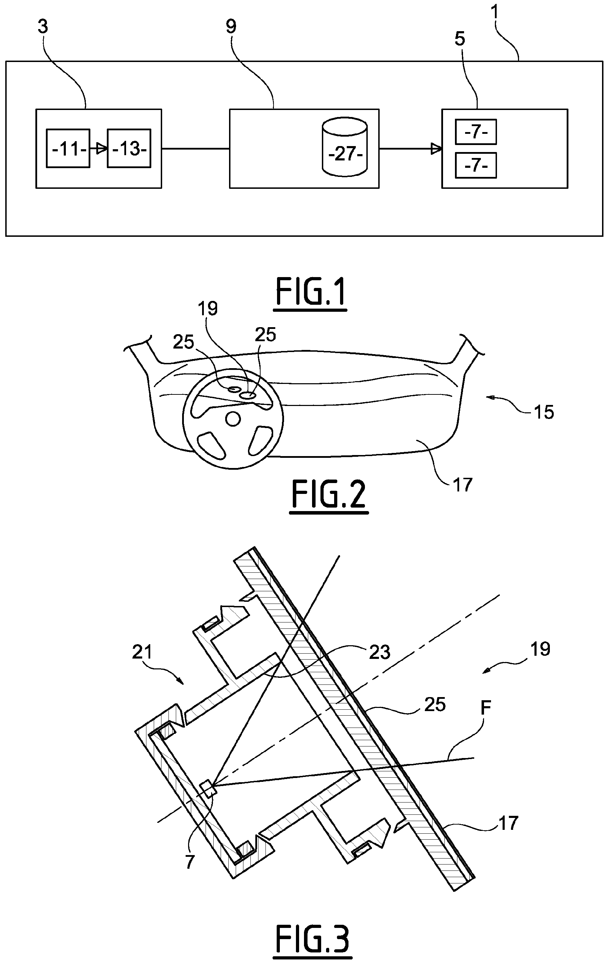

La figure 1 illustre de manière schématique un système 1 d'affichage d'au moins une information relative à un véhicule. L'information relative au véhicule est notamment :
- une information relative à un paramètre de fonctionnement du véhicule, telle qu'une information relative à la quantité de carburant restant dans le réservoir de carburant, à la charge de la batterie, au fonctionnement des circuits électroniques, au niveau d'huile etc. ;
- une information relative à la conduite du véhicule, telle qu'une information relative à la vitesse du véhicule, au freinage du véhicule, au changement de voie de circulation etc. ; ou
- une information relative à l'environnement du véhicule, telle que la distance de bouchons, la présence d'obstacles autour du véhicule, la présence d'autres véhicules dans l'angle mort, l'état de la route etc.

Cette liste de types d'informations susceptibles d'être affichées par le système d'affichage 1 est non limitative. D'une manière générale, le système d'affichage 1 est susceptible d'afficher toute information relative au véhicule susceptible d'être déterminée à l'aide d'au moins un capteur ou autre dispositif de mesure prévu dans le véhicule.

Le véhicule est plus particulièrement un véhicule automobile.

Le système d'affichage 1 est intégré à un véhicule. Il comprend :
- un dispositif d'acquisition 3 propre à acquérir l'information relative au véhicule ;
- un dispositif d'affichage 5 comprenant au moins deux sources lumineuses 7, configuré pour afficher l'information relative au véhicule dans l'habitacle du véhicule ; et
- une unité de commande 9 configurée pour recevoir l'information provenant dispositif d'acquisition 3 et pour commander l'allumage des sources lumineuses 7 suivant une séquence d'allumage mémorisée propre à l'information reçue.

Le dispositif d'acquisition 3, le dispositif d'affichage 5 et l'unité de commande 9 sont décrits plus en détail dans la suite de la description.

Le dispositif d'acquisition 3 comprend par exemple au moins un capteur 11 propre à effectuer une mesure liée à l'information à afficher. Le capteur 11 est prévu dans le véhicule. La nature du capteur 11 dépend de l'information à afficher. Il s'agit par exemple d'un capteur de vitesse, propre à mesurer la valeur de la vitesse du véhicule, d'un capteur de température, propre à mesurer la température du moteur, d'un capteur de charge de la batterie, d'un radar de recul etc., cette liste étant non limitative.

Selon un mode de réalisation, le dispositif d'acquisition 3 comprend en outre des moyens d'interprétation 13 propres à déduire l'information à afficher de la mesure effectuée par le capteur 11. Dans le cas où le capteur 11 est un capteur de vitesse, les moyens d'interprétation 13 sont par exemple propres à comparer la valeur de la vitesse mesurée par le capteur de vitesse 11 à des valeurs seuil pour en déduire si le véhicule est en excès de vitesse ou roule à une vitesse inférieure ou égale à la vitesse autorisée. Ces valeurs seuil sont par exemple mémorisées ou reçues par l'intermédiaire d'un second capteur, par exemple un capteur GPS. Dans ce cas, l'information affichée par le dispositif d'affichage 5 est par exemple le fait que le véhicule est en excès de vitesse ou qu'il roule à une vitesse inférieure ou égale à la vitesse autorisée. Dans ce cas, la mesure effectuée par le capteur 11 est différente de l'information affichée, l'information affichée étant déduite de la mesure effectuée par le capteur 11 par les moyens d'interprétation 13.

En variante, l'information affichée correspond directement à la mesure effectuée par le capteur 11.

Le dispositif d'affichage 5 affiche l'information directement sur un élément de garnissage 15 du véhicule, en particulier sur une surface externe d'un élément de garnissage 15 du véhicule. Dans l'exemple illustré sur la figure 1, l'élément de garnissage 15 est une planche de bord du véhicule.

Dans toute la description, on entend par « externe » ce qui est visible depuis l'intérieur de l'habitacle et par « interne » ce qui n'est pas visible. Les termes « avant » et « arrière » sont définis par rapport à l'orientation « avant » « arrière » habituelle d'un véhicule.

L'élément de garnissage 15 comprend une peau 17 formant la surface externe de l'élément de garnissage 15. Le dispositif d'affichage 5 est configuré pour afficher l'information directement sur la surface externe de la peau 17 de l'élément de garnissage 15. La peau 17 est translucide. Elle est par exemple réalisée en TPO (Thermoplastic PolyOlefin). L'information est affichée directement sur la surface externe de la peau 17 par diffusion de la lumière issue de chacune des sources lumineuses 7 à travers la peau 17 translucide. Plus précisément, la peau 17 de l'élément de garnissage 15 comprend une zone d'affichage 19 sur laquelle est affichée l'information à afficher. La zone d'affichage 19 est formée par une partie de la peau 17. Elle est par exemple située au niveau du volant, notamment entre la colonne de direction et le combiné d'instrumentation. En variante, elle est située dans la zone centrale supérieure de la planche de bord.

De façon connue, et comme illustré sur la figure 3, chaque source lumineuse 7 est disposée dans une boîte à lumière 21 comprenant une ouverture supérieure 23 recouverte par la peau 17 et en particulier par la zone d'affichage 19 de la peau 17. Une partie d'un tel dispositif d'affichage formée par une boîte à lumière 21 comprenant une source lumineuse 7, et par une partie de la zone d'affichage 19 est par exemple décrite dans les demandes de brevet publiées FR 2 917 350, FR 2 930 917, FR 2 920 119 et FR 2 937 604.

Chaque source lumineuse 7, lorsqu'elle est allumée, émet un faisceau de lumière F en direction de la zone d'affichage 19 de manière à former dans la zone d'affichage 19 une tache lumineuse 25 (voir figure 2) correspondante. Cette tache lumineuse 25 est de forme quelconque. Dans l'exemple représenté elle est de forme circulaire. Dans le mode de réalisation représenté, les taches lumineuses 25 résultant de chacune des sources lumineuses 7 du dispositif d'affichage 5 présentent des formes identiques. En option, si l'on souhaite donner une forme particulière à la tache lumineuse 25 affichée sur la peau 17, un masque de forme adaptée est interposé entre chaque source lumineuse 7 et la peau 17.

Chaque source lumineuse 7 comprend par exemple une diode de type diode électroluminescente. La couleur du faisceau lumineux F émis par chaque source lumineuse 7 est avantageusement réglable. A cet effet, la diode est par exemple une diode RGB. En variante, chaque source lumineuse 7 comprend trois diodes distinctes, émettant respectivement un faisceau de lumière bleue, rouge et verte, le faisceau F résultant de la combinaison des faisceaux issus de ces trois diodes.

En variante, les sources lumineuses 7 peuvent être des fibres optiques associées chacune à une diode électroluminescente ou des films électroluminescents appliqués sur l'envers de la zone d'affichage 19.

Les différentes sources lumineuses 7 sont agencées de manière à ce que les taches lumineuses 25 correspondantes affichées sur la peau 17 dans la zone d'affichage 19 soient séparées les unes des autres et puissent être distinguées les unes des autres. Le dispositif d'affichage 5 comprend avantageusement un nombre de sources lumineuses 7 supérieur à 2 afin d'augmenter le nombre de motifs différents aptes à être affichés par le dispositif d'affichage 5. Il comprend par exemple cinq ou neuf sources lumineuses 7.

Comme l'illustre la figure 1, l'unité de commande 9 est connectée à la sortie du dispositif d'acquisition 3 et à l'entrée du dispositif d'affichage 5. Elle est configurée pour recevoir l'information issue du dispositif d'acquisition 3. Elle comprend une base de données 27 dans laquelle sont mémorisées les séquences d'allumage des sources lumineuses 7. Cette base de données 27 associe à chaque information à afficher une séquence d'allumage spécifique des sources lumineuses 7. L'unité de commande 9 est propre à rechercher dans la base de données 27 la séquence d'allumage spécifique des sources lumineuses 7 correspondant à l'information issue du dispositif d'acquisition 3 et à commander l'allumage des sources lumineuses 7 du dispositif d'affichage 7 suivant cette séquence d'allumage spécifique.

La séquence d'allumage des sources lumineuses 7 correspond à l'allumage des sources lumineuses 7 selon un enchaînement prédéfini mémorisé dans la base de données 27 et comprenant l'allumage successif d'au moins deux sources lumineuses 7, plus particulièrement d'au moins trois sources lumineuses 7. L'allumage des sources lumineuses 7 selon la séquence d'allumage spécifique crée un motif animé spécifique à l'information à afficher. Ce motif animé est formé par la séquence de formation des taches lumineuses 25 résultant de l'allumage séquentiel des sources lumineuses 7.

Une séquence d'allumage donnée peut comprendre un allumage simultané de certaines sources lumineuses 7 à condition qu'elle comprenne également l'allumage successif d'au moins deux sources lumineuses 7.

Chaque séquence d'allumage est définie par :
- le nombre de sources lumineuses 7 allumées au cours de la séquence ;
- la position de ces sources lumineuses 7 et leur ordre d'allumage ;
- la durée d'allumage de chaque source lumineuse 7 ;
- la couleur de la tache lumineuse 25 formée par la source lumineuse 7 ; et/ou
- l'intensité de la tache lumineuse 25 formée par la source lumineuse 7.

L'unité de commande 9 est propre à commander individuellement l'alimentation de chacune des sources lumineuses 7 de manière à commander l'allumage des sources lumineuses 7 selon la séquence mémorisée correspondant à l'information reçue.

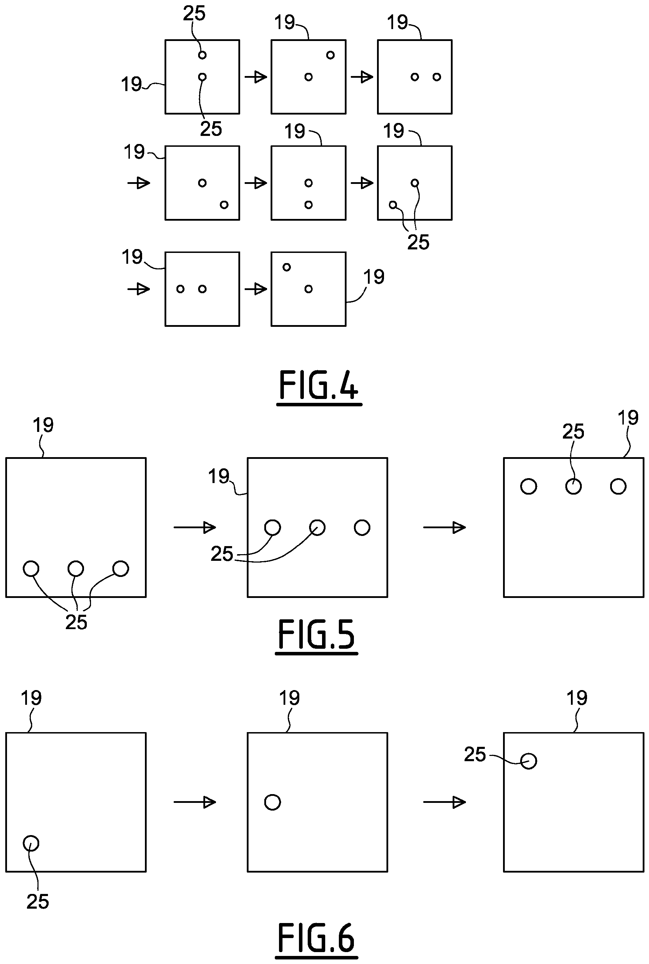

Les figures 4 à 6 illustrent des exemples de séquences d'allumage. Ces séquences d'allumage sont mises en oeuvre par un dispositif d'affichage 5 comprenant neuf sources lumineuses 7. Dans la séquence représentée à la figure 4, l'une des sources lumineuses 7 reste allumée en permanence, tandis que les autres sources lumineuses 7 s'allument successivement de manière à créer un motif animé. Cette séquence indique par exemple qu'un test des circuits électriques est en cours. Elle est par exemple déclenchée lorsqu'un capteur 11 correspondant détecte la mise du contact du véhicule. Elle est répétée aussi souvent que cela est souhaité, et en particulier tant que le test des circuits électroniques n'est pas achevé.

La séquence illustrée sur la figure 5 comprend l'allumage successif de groupes d'au moins deux sources lumineuses, en particulier trois sources lumineuses 7, les sources lumineuses 7 d'un même groupe étant allumées simultanément. Les groupes de sources lumineuses 7 s'allument par exemple successivement en partant de l'arrière et en allant vers l'avant de manière à créer un motif animé. Ce motif est répété aussi souvent que souhaité et notamment tant que l'information reste détectée par le capteur. La séquence illustrée sur la figure 4 correspond par exemple à une situation d'excès de vitesse déduite à partir d'une mesure de vitesse effectuée par un capteur de vitesse du véhicule.

La séquence de la figure 6 comprend l'allumage successif des sources lumineuses 7 disposées du côté gauche de la zone d'affichage 19. Le capteur correspondant est par exemple un capteur de détection d'objets dans une zone de détection s'étendant autour du véhicule. Cette séquence indique au conducteur qu'un véhicule est en train de dépasser son véhicule par la gauche.

Les séquences des figures 4 à 6 peuvent être modifiées en modifiant la couleur des taches lumineuses 25, la durée d'allumage des sources lumineuses 7 ou l'intensité des taches 25. Par exemple, dans le cas de la vitesse, les lampes pourront être allumées en rouge et avec une durée d'allumage décroissante vers l'avant pour signaler un excès de vitesse et en vert avec une durée d'allumage constante pour signaler une vitesse inférieure ou égale à la limitation de vitesse imposée.

L'élément de garnissage n'est pas nécessairement une planche de bord. Cet élément peut être toute autre structure intérieure de véhicule, par exemple une console centrale disposée entre les deux sièges avant du véhicule, un panneau de garnissage d'un des ouvrants du véhicule, une partie d'un siège d'un véhicule, un accoudoir, un panneau de garnissage d'un toit du véhicule, cette liste n'étant pas limitative.

La création d'un motif animé par allumage successif des sources lumineuses 7 crée une impression de mouvement qui attire l'attention du conducteur sur l'information que l'on cherche à lui transmettre et peut former un « langage » simple à comprendre par le conducteur sans distraire celui-ci de sa conduite. A ce titre, le dispositif d'affichage 5 est avantageusement disposé dans une zone facilement visible par le conducteur, sans que celui-ci ne détourne le regard de la route.

Chaque information relative au véhicule automobile est représentée par un motif animé donné, formé par une séquence donnée de formation ou d'affichage de taches lumineuses 25 dans la zone d'affichage 19.

Une tache lumineuse 25, prise isolément, n'a pas de signification symbolique en tant que telle. L'information relative au véhicule est représentée par l'affichage séquentiel des taches 25, plus particulièrement par la succession, l'agencement et éventuellement la couleur des taches lumineuses 25 affichées.

Les taches lumineuses 25, prises seules ou combinées entre elles, ne forment ni un symbole de type alphanumérique ni un symbole du type pictogramme.

A titre d'exemple le dispositif d'affichage 5 peut être disposé entre la colonne de direction et le combiné d'instrumentation, ou encore dans la zone centrale supérieure de la planche de bord.

En outre, le système d'affichage selon l'invention permet, à l'aide d'un même dispositif d'affichage faisant appel à un nombre limité de sources lumineuses, de communiquer un nombre important d'informations différentes au conducteur en affichant, pour chaque information, un motif animé spécifique correspondant à une séquence d'allumage spécifique des sources lumineuses. Ainsi, il devient possible d'ajouter de nouveaux types d'informations à indiquer au conducteur sans qu'il soit nécessaire d'augmenter les dimensions de la zone d'affichage ou de diminuer la place disponible pour l'affichage d'autres informations.

En outre, l'utilisation de telles séquences lumineuses évite une saturation du conducteur, puisque les informations lui sont suggérées par le motif animé utilisé plutôt qu'indiquées par un pictogramme particulier.

Lorsque le dispositif d'affichage affiche des zones lumineuses telles que des « taches » de couleur ne formant pas un symbole du type pictogramme ou symbole alpha numérique, le conducteur n'a pas besoin de déchiffrer l'information transmise par le système d'affichage 1 et est apte à comprendre cette information de façon intuitive. Ainsi, il ne lui est pas nécessaire de regarder directement le dispositif d'affichage 5 pour comprendre l'information affichée, ce qui lui permet de rester concentré sur la conduite du véhicule.

## Revendications

1. Système d'affichage (1) d'au moins une information relative à un véhicule dans l'habitacle dudit véhicule, comprenant :
- un dispositif d'acquisition d'informations (3) pour acquérir au moins une information relative au véhicule ;
- un dispositif d'affichage (5) comprenant au moins deux sources lumineuses (7) et configuré pour afficher la ou chaque information relative au véhicule dans l'habitacle du véhicule et une zone d'affichage (19) de la ou chaque information relative au véhicule ;
- une unité de commande (9), configurée pour recevoir la ou chaque information acquise par le dispositif d'acquisition (3) et pour commander l'allumage des sources lumineuses (7) selon un motif mémorisé correspondant à l'information reçue ;
le système étant **caractérisé en ce que** chaque source lumineuse (7) est configurée de manière à former lorsqu'elle est allumée une tache lumineuse (25) dans la zone d'affichage (19) et **en ce que**, pour chaque information reçue par l'unité de commande (9), le motif mémorisé comprend l'allumage séquentiel des deux sources lumineuses (7) du dispositif d'affichage (5) suivant une séquence d'allumage dépendant de l'information reçue, l'allumage séquentiel des sources lumineuses (7) résultant dans la formation séquentielle de taches lumineuses (25) dans la zone d'affichage (19) de manière à former un motif animé dans la zone d'affichage (19), l'information reçue étant représentée par la séquence d'affichage des taches lumineuses (25).

2. Système d'affichage (1) selon la revendication 1, dans lequel le dispositif d'affichage (5) est agencé pour afficher la ou chaque information directement sur une surface externe d'un élément de garnissage (15) du véhicule.

3. Système d'affichage selon la revendication 2, dans lequel le dispositif d'affichage (5) est agencé pour afficher la ou chaque information directement sur une surface externe d'une planche de bord (15) du véhicule.

4. Système d'affichage selon l'une quelconque des revendications précédentes, dans lequel la séquence d'allumage est définie par l'ordre d'allumage des sources lumineuses (7), la durée d'allumage, la couleur et/ou l'intensité de chaque source lumineuse (7).

5. Système d'affichage (1) selon l'une quelconque des revendications précédentes, dans lequel le dispositif d'acquisition (3) comprend au moins un capteur (11), propre à effectuer des mesures relatives à un paramètre de fonctionnement du véhicule, au moins une information à afficher par le système d'affichage (1) étant déterminée à partir de la valeur dudit paramètre.

6. Système d'affichage (1) selon l'une quelconque des revendications précédentes, dans lequel le dispositif d'affichage (5) est propre à afficher au moins deux informations différentes, chaque information correspondant à une séquence d'allumage spécifique des sources lumineuses (7).

7. Système d'affichage (1) selon l'une quelconque des revendications précédentes, dans lequel le dispositif d'affichage (5) comprend plus de deux sources lumineuses (7), la séquence d'allumage comprenant l'allumage séquentiel d'au moins deux desdites sources lumineuses (7).

8. Système d'affichage (1) selon l'une quelconque des revendications précédentes, dans lequel les taches lumineuses (25), prises seules ou combinées entre elles, ne forment ni un symbole de type alphanumérique, ni un symbole de type pictogramme.

9. Véhicule comprenant un système d'affichage (1) selon l'une quelconque des revendications précédentes.

10. Procédé d'affichage d'au moins une information relative à un véhicule au moyen d'un système d'affichage (1) selon l'une quelconque des revendications 1 à 8, comprenant les étapes de :
- acquérir au moins une information relative au véhicule ;
- commander l'allumage d'au moins deux sources lumineuses en fonction de l'information acquise à l'étape d'acquisition selon un motif mémorisé correspondant à l'information acquise à l'étape d'acquisition ; et
- afficher ledit motif dans un habitacle du véhicule ;
**caractérisé en ce que**, pour chaque information acquise, le motif mémorisé comprend l'allumage séquentiel des deux sources lumineuses (7) suivant une séquence d'allumage dépendant de l'information reçue, l'allumage séquentiel des sources lumineuses (7) résultant dans la formation séquentielle de taches lumineuses (25) dans la zone d'affichage (19) de manière à former un motif animé dans la zone d'affichage (19), l'information reçue étant représentée par la séquence d'affichage des taches lumineuses (25).

## Patentansprüche

1. System zum Anzeigen (1) von mindestens einer Information, die sich auf ein Fahrzeug in dem Fahrgastraum des Fahrzeugs bezieht, aufweisend:
- eine Informationserfassungseinrichtung (3) zum Erfassen von mindestens einer Information über das Fahrzeug;
- eine Anzeigevorrichtung (5), die mindestens zwei Lichtquellen (7) aufweist und eingerichtet ist, die oder jede Information bezüglich des Fahrzeugs in dem Fahrgastraum des Fahrzeugs anzuzeigen, und einen Bereich zum Anzeigen (19) der oder jeder Information über das Fahrzeug aufweist;
- eine Steuereinheit (9), die eingerichtet ist, die oder jede von der Erfassungsvorrichtung (3) erfasste Information zu empfangen und die Beleuchtung der Lichtquellen (7) gemäß einem gespeicherten Motiv entsprechend der empfangenen Information zu steuern;
wobei das System **dadurch gekennzeichnet ist, dass** jede Lichtquelle (7) derart eingerichtet ist, in dem Anzeigebereich (19) einen Lichtpunkt (25) zu bilden, wenn sie eingeschaltet ist und dadurch, dass für jede Information, die von der Steuereinheit (9) empfangen wird das gespeicherte Motiv das sequentielle Einschalten der zwei Lichtquellen (7) der Anzeigevorrichtung (5) gemäß einer Einschaltsequenz in Abhängigkeit von der empfangenen Information aufweist, wobei das sequentielle Einschalten der Lichtquellen (7) in der sequentiellen Bildung von Lichtpunkten (25) im Anzeigebereich (19) führt, derart, dass ein animiertes Motiv in dem Anzeigebereich (19) gebildet wird, wobei die empfangene Information durch die Folge des Anzeigens der Lichtpunkte (25) dargestellt wird.

2. Anzeigesystem (1) nach Anspruch 1, in dem die Anzeigevorrichtung (5) angeordnet ist, um die oder jede Information direkt auf einer Außenfläche eines Verkleidungselements (15) des Fahrzeugs anzuzeigen.

3. Anzeigesystem nach Anspruch 2, wobei die Anzeigevorrichtung (5) angeordnet ist, um die oder jede Information direkt auf einer Außenfläche eines Armaturenbretts (15) des Fahrzeugs anzuzeigen.

4. Anzeigesystem nach einem der vorhergehenden Ansprüche, wobei die Einschaltsequenz durch die Einschaltreihenfolge der Lichtquellen (7), die Einschaltdauer, die Farbe und / oder die Intensität jeder Lichtquelle (7) definiert ist.

5. Anzeigesystem (1) nach einem der vorhergehenden Ansprüche, in dem die Erfassungsvorrichtung (3) mindestens einen Sensor (11) aufweist, geeignet zum Durchführen von Messungen, die sich auf einen Betriebsparameter des Fahrzeugs beziehen, wobei mindestens eine Information, die von dem Anzeigesystem (1) angezeigt werden soll, ausgehend von dem Wert des Parameters bestimmt wird.

6. Anzeigesystem (1) nach einem der vorhergehenden Ansprüche, in dem die Anzeigevorrichtung (5) dazu geeignet ist, mindestens zwei unterschiedliche Informationen anzuzeigen, wobei jede Information einer bestimmten Einschaltsequenz der Lichtquellen entspricht (7).

7. Anzeigesystem (1) nach einem der vorhergehenden Ansprüche, in dem die Anzeigevorrichtung (5) mehr als zwei Lichtquellen (7) aufweist, wobei die Einschaltsequenz das sequentielle Einschalten von mindestens zwei der Lichtquellen (7) aufweist.

8. Anzeigesystem (1) nach einem der vorhergehenden Ansprüche, wobei die Lichtpunkte (25) alleine oder in Kombination miteinander weder ein alphanumerisches Typsymbol noch ein Symbol vom Piktogrammtyp bilden.

9. Fahrzeug mit einem Anzeigesystem (1) nach einem der vorhergehenden Ansprüche.

10. Verfahren zum Anzeigen von mindestens einer Information bezüglich eines Fahrzeugs mittels eines Anzeigesystems (1) nach einem der Ansprüche 1 bis 8, aufweisend die Schritte:
- Erfassen von mindestens einer Information über das Fahrzeug;
- Steuern des Einschaltens von mindestens zwei Lichtquellen abhängig von den im Erfassungsschritt erfassten Informationen gemäß einem gespeicherten Motiv, das den im Erfassungsschritt erfassten Informationen entspricht; und
- Anzeigen des Motivs in einem Fahrgastraum des Fahrzeugs;
**dadurch gekennzeichnet, dass** das gespeicherte Motiv für jede erfasste Information das sequentielle Einschalten der zwei Lichtquellen (7) gemäß einer Einschaltsequenz in Abhängigkeit von der empfangenen Information aufweist, wobei das sequentielle Einschalten der Lichtquellen (7) im sequentiellen Bilden von Lichtpunkten (25) in dem Anzeigebereich (19) resultiert, derart, dass ein animiertes Motiv in dem Anzeigebereich (19) gebildet wird, wobei die empfangene Information durch die Anzeigefolge der Lichtpunkte dargestellt wird (25).

## Claims

1. A display system (1) for displaying at least one piece of information relative to a vehicle in the passenger compartment of said vehicle, comprising:
- an information acquisition device (3) for acquiring at least one piece of information related to the vehicle;
- a display device (5) comprising at least two light sources (7), and which is configured to display the or each piece of information related to the vehicle in the passenger compartment of the vehicle and a display zone (19) for the or each piece of information relative to the vehicle;
- a control unit (9), which is configured to receive the or each piece of information acquired by the acquisition device (3) and to control the lighting of the light sources (7) according to a stored pattern corresponding to the received piece of information.
the system being **characterized in that** each light source (7) is configured so as, when it is lit, to form a light spot (25) in the display zone (19) and **in that**, for each piece of information received by the control unit (9), the stored pattern comprises the sequential lighting of the two light sources (7) of the display device (5) according to a lighting sequence depending on the received piece of information, the sequential lighting of the light sources (7) resulting in the sequential formation of light spots (25) in the display zone (19) so as to form an animated pattern in the display zone (19), the received piece of information being represented by the display sequence of the light spots (25).

2. The display system (1) according to claim 1, wherein the display device (5) is arranged to display the or each piece of information directly on an outer surface of a trim element (15) of the vehicle.

3. The display system according to claim 2, wherein the display device (5) is arranged to display the or each piece of information directly on an outer surface of the dashboard (15) of the vehicle.

4. The display system according to any one of the preceding claims, wherein the lighting sequence is defined by the lighting order of the light sources (7), the length of lighting, the color and/or the intensity of each light source (7).

5. The display system (1) according to any one of the preceding claims, wherein the acquisition device (3) comprises at least one sensor (11), capable of taking measurements relative to an operating parameter of the vehicle, at least one piece of information to be displayed by the display system (1) being determined from the value of said parameter.

6. The display system (1) according to any one of the preceding claims, wherein the display device (5) is capable of displaying at least two different pieces of information, each piece of information corresponding to a specific lighting sequence of the light sources (7).

7. The display system (1) according to any one of the preceding claims, wherein the display device (5) comprises more than two light sources (7), the lighting sequence comprising the sequential lighting of at least two of said light sources (7).

8. The display system (1) according to any one of the preceding claims, wherein the light spots (25), considered alone or in combination with each other, do not form an alphanumeric symbol or a pictogram.

9. A vehicle comprising a display system (1) according to any one of the preceding claims.

10. A method for displaying at least one piece of information relative to a vehicle using a display system (1) according to any one of claims 1 to 8, comprising the following steps:
- acquiring at least one piece of information relative to the vehicle;
- controlling the lighting of at least two light sources based on the piece of information acquired during the acquisition step according to a stored pattern corresponding to the received piece of information; and
- displaying said pattern in the passenger compartment of the vehicle;
**characterized in that**, for each acquired piece of information, the stored pattern comprises the sequential lighting of the two light sources (7) according to a lighting sequence that depends on the received piece of information, the sequential lighting of the light sources (7) resulting in the sequential formation of light spots (25) in the display zone (19) so as to form an animated pattern in the display zone (19), the received piece of information being represented by the display sequence of the light spots (25).
